Europäisches Patentamt

European Patent Office

Office européen des brevets

(19)

(11) Numéro de publication: **0 151 054**
**B1**

(12) **FASCICULE DE BREVET EUROPEEN**

(45) Date de publication du fascicule du brevet: **03.05.89**

(51) Int. Cl.⁴: **F 16 L 37/00**

(21) Numéro de dépôt: **85400011.4**

(22) Date de dépôt: **04.01.85**

(54) **Collier de dérivation, notamment pour systèmes d'irrigation.**

(30) Priorité: **06.01.84 FR 8400155**

(43) Date de publication de la demande:
**07.08.85 Bulletin 85/32**

(45) Mention de la délivrance du brevet:
**03.05.89 Bulletin 89/18**

(84) Etats contractants désignés:
**AT BE CH DE GB IT LI LU NL SE**

(56) Documents cités:
**CH-A- 608 872**
**DE-A-3 148 818**
**US-A-1 908 821**
**US-A-4 112 944**

(73) Titulaire: **KULKER S.A. Société dite:**
**Route d'Orléans**
**F-45600 Sully sur Loire (FR)**

(72) Inventeur: **Selingant, Jean-Louis**
**3, rue des Médecins**
**F-45600 Sully Sur Loire (FR)**

(74) Mandataire: **Armengaud Ainé, Alain**
**Cabinet ARMENGAUD AINE 3 Avenue Bugeaud**
**F-75116 Paris (FR)**

Courier Press, Leamington Spa, England.

## Description

La présente invention concerne un collier de dérivation monobloc, destiné en particulier à la réalisation de dérivations, par piquage sur une conduite principale, en vue d'alimenter un réseau secondaire. Parmi les applications possibles de cette invention, on peut citer, à titre d'exemple, l'adduction d'eau et les réseaux d'irrigation.

A l'heure actuelle, il existe des colliers de dérivations qui comprennent généralement plusieurs éléments: le collier proprement dit, qui vient se fixer autour de la conduite sur laquelle se branche la dérivation; une pièce centrale constituant une portion de tubulure qui traverse un trou prévu dans le collier et qui vient se placer, par piquage, sur la conduite principale, la dérivation étant branchée sur cette portion de conduite, et un joint assurant l'étanchéité entre le collier et la portion de tubulure.

Une télle solution est notamment connue par le US—A—4 112 944. Toutefois, elle présente l'inconvénient majeur de nécessiter un grand nombre de pièces pour réaliser la dérivation souhaitée, en particulier pour assurer l'étanchéité nécessaire au droit de la portion de tubulure traversant la conduite pincipale.

On connaît également une autre solution par le US—A—1 908 821 où une portion de tube destinée à traverser la conduite principale est solidarisée d'un étrier qui vient coiffer une partie de cette conduite, la liaison étant ensuite réalisée avec cet étrier par soudure. De façon évidente une telle solution ne s'applique pas avec un collier en matière plastique; par ailleurs, dans ce cas comme avec l'autre brevet américain mentionné ci-dessus, le collier ne peut pas s'adapter à des conduites de dimensions diamétrales différentes, chaque dispositif ne pouvant convenir qu'à un type unique de conduite.

La présente invention a pour objet un collier de dérivation qui permet de pallier ces inconvénients au moyen d'un ensemble en forme de boucle, de préférence en matière plastique, entourant la conduite principale et présentant une partie tubulaire centrale pourvue d'un alésage axial et dont une portion est propre à traverser la conduite principale et une autre portion à être raccordée à la conduite dérivée, par serrage du collier autour de la conduite principale au moyen des extrémités de la boucle, ce collier étant caractérisé en ce qu'il est constitué par une bande formant avec la partie tubulaire centrale une pièce monobloc venue de moulage, ladite bande de longueur ajustable réalisant l'étanchéité par serrage entre la conduite principale et la partie tubulaire centrale au droit de la portion de celle-ci traversant la conduite.

Selon une autre caractéristique de l'invention, la bande présente une partie lisse à son extrémité pour en faciliter l'introduction dans la boucle, et elle comporte une pluralité de stries, constituées de préférence de dents triangulaires, qui sont placées de manière à être au contact de la conduite principale lorsque le collier est maintenu sur cette dernière.

D'autres caractéristiques et avantages de l'invention ressortiront de la description faite ci-après, en référence au dessin annexé, qui en illustre un mode de réalisation, donné à titre indicatif et non limitatif.

Sur ce dessin:
— la figure 1 est une vue en coupe d'un collier de dérivation selon l'invention;
— la figure 2 est une vue de dessus de la figure 1; et
— la figure 3 représente, en coupe, le collier en place sur une conduite principale.

En se référant au dessin, on voit que le collier de dérivation selon cette invention constitue un ensemble monobloc, constitué d'un lien 10 composé d'une bande, de préférence en matière plastique, comportant une partie centrale 12 qui, dans cet exemple de réalisation, est de forme circulaire, munie d'un alésage central 14 sur lequel viennent, de moulage, deux portions de tube 16 et 18. Le tube 16 présente une forme tronconique, de manière à permettre une mise en place par piquage dans la conduite principale 20, et le tube 18 est pourvu de saillies annulaires 22, et il est terminé par un tronc de cône, afin de permettre son insertion sur le tube de dérivation.

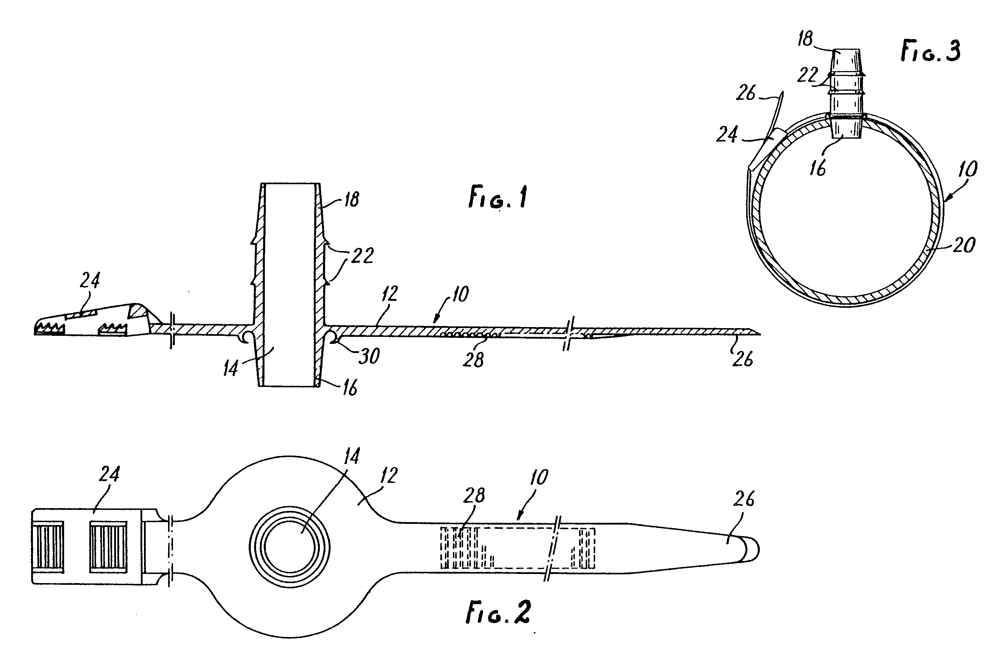

L'une des extrémités de la bande du lien 10 est en forme de boucle 24, de manière à coopérer avec l'autre extrémité 26 pour refermer et serrer le collier autour de la conduite 20 (figure 3). A cet effet, l'extrémité 26 du lien 10 présente une forme triangulaire arrondie, pour en faciliter l'introduction dans la boucle 24.

La bande constituant le lien 10 comporte une série de stries transversales 28, constituées de dents triangulaires, qui sont placées de manière à être au contact de la conduite principale 20 lors du serrage du collier. Grâce à cette disposition, les stries 28 ne sont pas exposées, et, notamment, elles ne sont pas soumises à l'action du rayonnement ultra-violet, susceptible de les endommager.

Pour assurer l'étanchéité entre le collier selon l'invention et la conduite principale 20 sur laquelle il est mis en place (figure 3), on donne au pourtour circulaire de l'alésage 14 la forme d'un joint circulaire à lèvres 30.

La façon selon laquelle le collier ainsi décrit se met en place sur la conduite 20 ressort clairement de l'examen de la figure 3.

Parmi les avantages apportés par l'invention, on peut citer notamment:
— réalisation d'un collier monobloc de façon économique, par moulage par injection, avec un seul moule d'injection et plusieurs jeux de coquilles pour la réalisation des différents éléments des tubes 16, 18;
— disposition des dents 28, qui permet de diminuer l'effort sur les dents, pour les forces réactives, de réduire l'effet des rayons ultraviolets, et d'éviter le décrochage après blocage, tout en favorisant l'accrochage;
— mise en place extrêmement facile, grâce au lien monobloc;
— possibilité d'assurer un auto-contrôle de la force de traction fournie par la pince utilisée pour le raccordement des systèmes de dérivations, sans dépasser la limite élastique du lien, dans sa partie active restant à demeure sur la conduite principale.

## Revendications

1. Collier de dérivation, notamment pour système d'adduction d'eau et d'irrigation, par piquage d'une conduite dérivée sur une conduite principale (20), comportant un ensemble (10) en forme de boucle, de préférence en matière plastique, entourant la conduite principale et présentant une partie tubulaire centrale (12) pourvue d'un alésage axial (14) et dont une portion (16) est propre à traverser la conduite principale et une autre portion (18) à être raccordée à la conduite dérivée, par serrage du collier autour de la conduite principale au moyen des extrémité de la boucle, caractérisé en ce qu'il est constitué par une bande formant avec la partie tubulaire centrale une pièce monobloc venue de moulage, ladite bande de longueur ajustable réalisant l'étanchéité par serrage entre la conduite principale (20) et la partie tubulaire centrale (12) au droit de la portion (16) de celle-ci traversant la conduite.

2. Collier de dérivation selon la revendication 1, caractérisé en ce que la bande présente une partie lisse à son extrémité (26), pour faciliter l'introduction dans la boucle, et en ce qu'elle présente une pluralité de stries transversales (28) qui sont placées de manière à être au contact de la conduite principale, c'est-à-dire non exposées aux rayonnements ultraviolets, lorsque le collier est en place sur cette conduite.

3. Collier de dérivation selon la revendication 2, caractérisé en ce que les stries transversales (28) sont en forme de dents triangulaires.

4. Collier de dérivation selon l'une quelconque des revendications précédentes, caractérisé en ce que le pourtour annulaire de l'alésage (14) de la partie centrale présente la forme d'un joint circulaire à lèvres (30).

## Patentansprüche

1. Abzweigstück, insbesondere für Wasserversorgungs- und Bewässerungssysteme, zur Abzweigung einer Nebenleitung von einer Hauptleitung (20), bestehend aus einer Schnalleneinrichtung (10), vorzugsweise aus Kunststoff, die die Hauptleitung umgreift und ein röhrenförmiges Mittelteil (12) mit einer Axialbohrung (14) aufweist, wobei das eine Ende (16) des Mittelteiles (12) so ausgestaltet ist, daß es die Hauptleitung durchdringt, und das andere Ende (18) mit der Nebenleitung verbindbar ist und die Abzweigung dadurch erfolgt, daß das Abzweigstück mit Hilfe der Enden der Schnalle um die Hauptleitung herum festgespannt wird, dadurch gekennzeichnet, daß das Abzweigstück ein Band aufweist, welches mit dem röhrenförmigen Mittelteil als einstückiges Formgußteil ausgebildet ist, wobei das Band in seiner Länge einstellbar ist und die Dichtheit dadurch gewährleistet wird, daß die Hauptleitung (20) mit dem rohrförmigen Mittelteil (12) mit Hilfe seines die Leitung durchdringenden Abschnittes (16) verspannt wird.

2. Abzweigstück nach Anspruch 1, dadurch gekennzeichnet, daß das Band an seinem Ende (26) einen glatten Abschnitt aufweist, um das Einführen in die Schnalle zu erleichtern, und daß es ferner mehrere Querriefen (28) aufweist, die so angeordnet sind, daß sie mit der Hauptleitung in Berührung stehen, das heißt keinen Ultraviolett-Strahlungen ausgesetzt sind, wenn die Abzweigmanschette auf der Leitung angebracht ist.

3. Abzweigstück nach Anspruch 2, dadurch gekennzeichnet, daß die Querriefen (28) die Form einer Dreieckszahnung aufweisen.

4. Abzweigstück nach einem der vorhergehenden Ansprüche, dadurch gekennzeichnet, daß am ringförmigen äußeren Umfang des mit der Bohrung (14) versehenen Mittelteiles eine ringförmige Lippendichtung (30) vorgesehen ist.

## Claims

1. A branch fitting, in particular for a water supply and irrigation system, involving connection of a branch pipe to a main pipe (20), comprising a loop-shaped assembly (10), preferably composed of plastics material, surrounding the main pipe and having a tubular central part (12) which is provided with an axial bore (14) and of which one portion (16) traverses the main pipe while a further portion (18) is connected to the branch pipe, by tightening of the fitting round the main pipe by means of the loop ends, characterised in that it is constituted by a strap which forms, with the tubular central part, an integrally moulded monobloc member, said strap of adjustable length producing the seal by gripping between the main pipe (20) and the tubular central part (12) in the region of the portion (16) of the part traversing the pipe.

2. A branch fitting according to claim 1, characterised in that the strap has a smooth part at its end (26) to facilitate introduction into the loop and in that it has a plurality of transverse striations (28) which are positioned so as to be in contact with the main pipe, that is to say not exposed to ultraviolet radiation, when the fitting is in position on this pipe.

3. A branch fitting according to claim 2, characterised in that the transverse striations (28) have the form of triangular teeth.

4. A branch fitting according to any one of the preceding claims, characterised in that the annular periphery of the bore (14) of the central part has the form of a circular lip seal (30).

Fig.3

Fig.1

Fig.2

1